# EUROPEAN PATENT SPECIFICATION

(11) **EP 2 657 313 B1**
(45) Date of publication and mention of the grant of the patent: **22.07.2020**
(21) Application number: 11851759.8
(22) Date of filing: 06.12.2011
(51) Int. Cl.: C09J 7/29, C09J 11/06, B32B 7/02, B32B 27/08, B32B 27/36, C09J 201/02

(54) **DECORATIVE FILM INCLUDING AN ADHESIVE RESIN COMPOSITION CONTAINING AN AMINE-BASED ACCELERATOR**
SCHMUCKFOLIE MIT HAFTFÄHIGER HARZZUSAMMENSETZUNG MIT EINEM BESCHLEUNIGER AUF AMINBASIS
FILM DÉCORATIF COMPORTANT UNE COMPOSITION DE RÉSINES ADHÉSIVES CONTENANT UN ACCÉLÉRATEUR À BASE D'AMINE

(30) Priority: 24.12.2010 KR 20100134856
(43) Date of publication of application: 30.10.2013
(73) Proprietor: LG Hausys, Ltd., Seoul 150-876 (KR)
(72) Inventor: LEE, Eok-Hyung, Cheongju-si Chungcheongbuk-do 361-727 (KR); YOON, Chan-Oh, Cheongju-si Chungcheongbuk-do 361-230 (KR); KIM, Jang-Soon, Seongnam-si Gyeonggi-do 463-889 (KR)
(74) Representative: Zacco Denmark A/S
(86) International application number: PCT/KR2011/009371
(87) International publication number: WO 2012/086944

(56) References cited:
- EP-A2- 0 488 949
- WO-A1-2008/076101
- WO-A1-2010/077435
- JP-A- S57 167 458
- JP-A- 2004 284 119
- JP-A- 2008 069 232
- KR-A- 20060 078 530
- KR-A- 20080 024 351
- US-A1- 2007 287 017
- US-B2- 7 385 020
- US-B2- 7 385 020

## Description

### [Technical Field]

The present invention relates to a decorative film using an adhesive resin layer, which includes an amine accelerator to secure coating stability and to increase reaction rate such that the decorative film has little deviation in quality (boil resistance) between and within rolls in a short time, and a decorative film manufactured using the same.

### [Background Art]

A high-gloss metallic sheet or film is a decorative material having an elegant metallic gloss equivalent to that of a metal plate or sheet, which is used for a variety of applications, such as building materials, home appliances, cars, business cards, and labels.

Korean Patent Publication No. 2006-78530A discloses a high gloss sheet exhibiting a metallic texture stacked on an iron plate or an aluminum plate for use as a high-gloss decorative material. The high gloss sheet includes a polyethylene terephthalate (PET) film having a UV-curable or heat-curable resin layer deposited on one surface thereof and a hairline pattern layer formed on the other surface thereof, a primer layer of a polyester copolymer, an aluminum deposition layer, a urethane adhesive layer, and a thermoplastic resin sheet layer, which are sequentially disposed.

Further, Korean Patent Publication No. 2008-24351A discloses an interior decorative sheet in which a colored PVC film, an adhesive layer, a metal-deposited layer, a transparent print layer, and a transparent PVC film are sequentially stacked.

However, a conventional method involves a separate process of primer treatment or printing in order to enhance the adhesion between PET and a metal deposited layer, thus decreasing process efficiency.

Further, as a hairline is formed on one surface of the PET and then primer treatment or printing is carried out thereon, the hairline effect on the PET surface is reduced.

For process simplification, an adhesive resin may be directly applied to a semi-product formed by metal-coating on PET, or additional physical treatment may be carried out using rough cloth or sandpaper on one surface of PET to provide metallic pattern effects.

Meanwhile, one surface of PET is coated with a metal material via vacuum deposition and an adhesive resin layer is formed on the metal coating. Here, an adhesive resin is generally a polyester resin, a urethane resin, and an ester urethane resin. These adhesive resins are generally formed through urethane reaction, which generally proceeds slowly and is influenced considerably by external environmental variable, such as temperature and humidity.

Further, when a decorative film having a metallic effect is subjected to aging (40 to 60°C) in a roll state after manufacture, substantial quality deviation of the decorative film occurs within the roll and between rolls due to due to difference in heat transfer history and temperature between parts.

### [Disclosure]

### [Technical Problem]

Exemplified is an adhesive resin composition for a decorative film, in which an appropriate accelerator is introduced into an adhesive resin needed for the preparation of a decorative film having a metallic effect to ensure coating stability, such as pot life, and to increase a reaction rate, thereby providing an adhesive resin having uniform quality (boil resistance) between and within rolls in a short time.

An aspect of the present invention is to provide a decorative film manufactured using the adhesive resin composition.

Exemplified is a decorative film in which adhesive strength between a base layer and a metal-treated layer is improved without an additional treatment process, such as primer treatment.

### [Technical Solution]

An adhesive resin composition for a decorative film includes an adhesive resin and an amine accelerator.

In the composition of the present invention, the amine accelerator may have a functional group reacting with active hydrogen, wherein the active hydrogen may include at least one selected from an OH group, a COOH group, and an NH group, and the functional group may include at least one selected from a glycidyl group and an aziridine group. In the composition of the present invention, the amine accelerator includes an aziridine compound and/or a glycidyl amine compound represented by Formula 6 and 3, respectively. Exemplified, the amine accelerator includes an aziridine compound and/or a glycidyl amine compound, selected from compounds represented by Formulae 1 to 3: 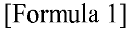 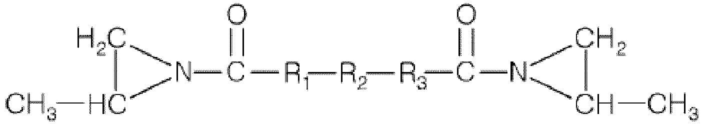 wherein R₁ and R₃ are a single bond or -HN-, R₂ is C1 to C12 alkylene or C6 to C12 arylene substituted or unsubstituted by C1 to C4 alkyl; 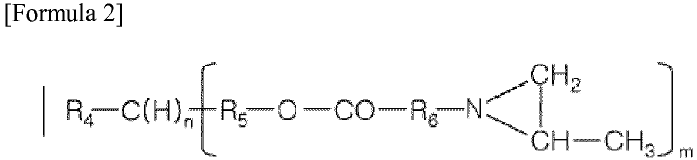 wherein R₄ is C1 to C4 alkyl, R₅ and R₆ are each independently C1 to C4 alkylene, m is an integer from 1 to 3, n is an integer from 0 to 2, and the sum of m and n is 3; and 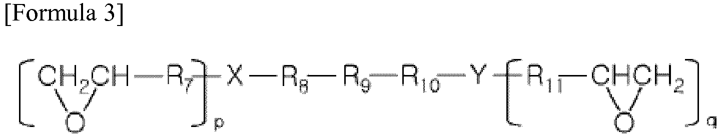 wherein R₇ and R₁₁ are each independently a C1 to C4 alkylene, R₈ and R₁₀ are each independently a single bond, C1 to C4 alkylene, or C6 to C12 arylene, R₉ is C1 to C4 alkylene, or C6 to C12 arylene, X and Y are each independently an oxygen or nitrogen atom, p and q are each 1 when X or Y is an oxygen atom, and p and q are each 2 when X or Y is a nitrogen atom.

Exemplified, the aziridine compound represented by Formula 1 is one selected from compounds represented by Formulae 4 to 8: 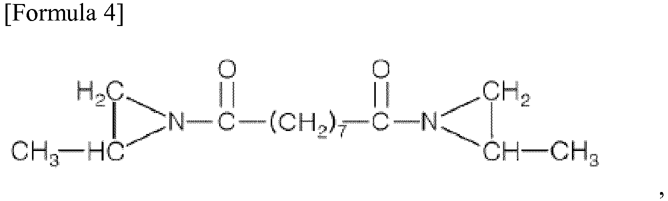 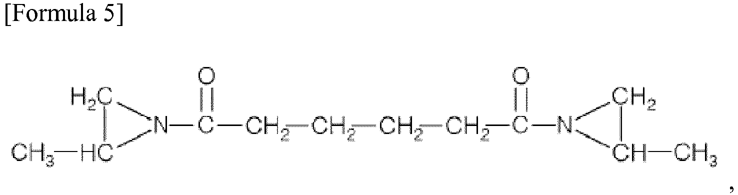 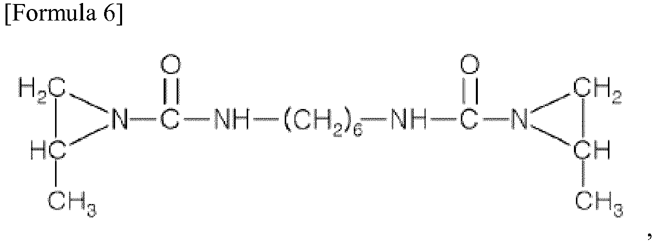 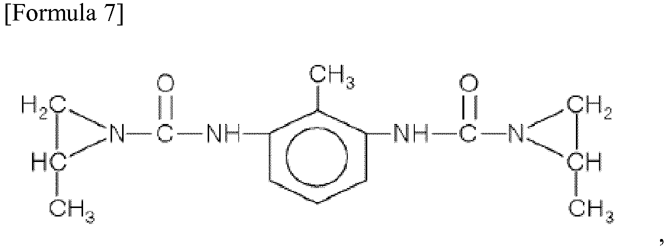 and

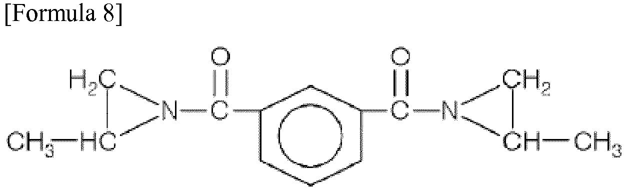

Exemplified, the aziridine compound represented by Formula 2 is a compound represented by Formula 9:

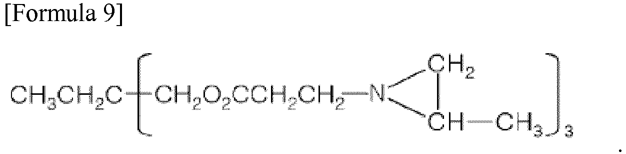

Exemplified, the glycidyl amine compound represented by Formula 3 is one selected from compounds represented by Formulae 10 and 11: 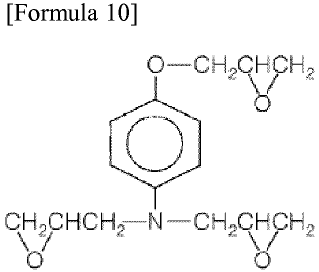 and

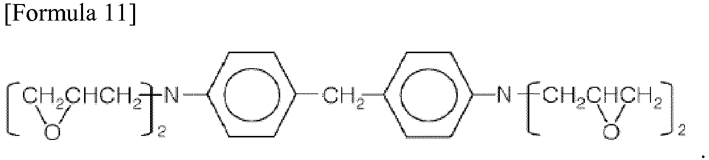

In the present invention, an amine (including N) accelerator having a functional group reacting with active hydrogen is used for the adhesive resin needed for the preparation of a decorative film having a metallic effect to increase the reaction rate.

In accordance with the present invention, a decorative film includes a base layer, a metal-treated layer formed on a lower surface of the base layer; and an adhesive resin layer formed on a lower surface of the metal-treated layer and including an adhesive resin and an amine accelerator.

The decorative film may further include a coating film layer formed on a lower surface of the adhesive resin layer and/or a surface-treated layer formed on an upper surface of the base layer.

The decorative film may include a hairline formed on the lower surface of the base layer.

Examplified, a decorative film includes a base layer formed of a crystalline resin layer and an amorphous resin layer; a metal-treated layer formed on a lower surface of the amorphous resin layer; and an adhesive resin layer formed on a lower surface of the metal-treated layer and including an adhesive resin and an amine accelerator.

The crystalline resin layer may include a polyethylene terephthalate (PET) resin, and the amorphous resin layer may include a polyester resin.

The base resin may be a coextruded sheet of a crystalline resin layer and an amorphous resin layer or a transparent layer and have a thickness of 10 to 50 µm.

The amorphous resin layer may have a glass transition temperature (Tg) of 40 to 80°C and include a hairline.

The decorative film may be used for the exterior decoration of home appliances, such as a refrigerator, a washing machine, and a microwave.

### [Advantageous Effects]

According to the present invention, an appropriate accelerator is introduced into an adhesive resin needed for preparation of a decorative film having a metallic effect to ensure coating stability, such as pot life, and to increase a reaction rate, thereby providing an adhesive resin having little deviation in quality (boil resistance) between and within rolls in a short time.

Further, a transparent coextruded PET film is used for a base layer, thereby improving adhesive strength between a base layer and a metal-treated layer without an additional treatment process, such as primer treatment.

### [Description of Drawings]

Fig. 1 illustrates a configuration of a conventional decorative film.
Fig. 2 illustrates a configuration of a decorative film according to a first embodiment of the present invention.
Fig. 3 illustrates a configuration of a decorative film according to a second embodiment of the present invention.
Fig. 4 illustrates a configuration of a decorative film according to a third embodiment of the present invention.
Fig. 5 illustrates a configuration of a decorative film according to a fourth embodiment of the present invention.
Fig. 6 illustrates a configuration of a decorative film according to a fifth embodiment of the present invention.

### [Mode for Invention]

Hereinafter, the present invention will be described in detail with reference to the accompanying drawings.

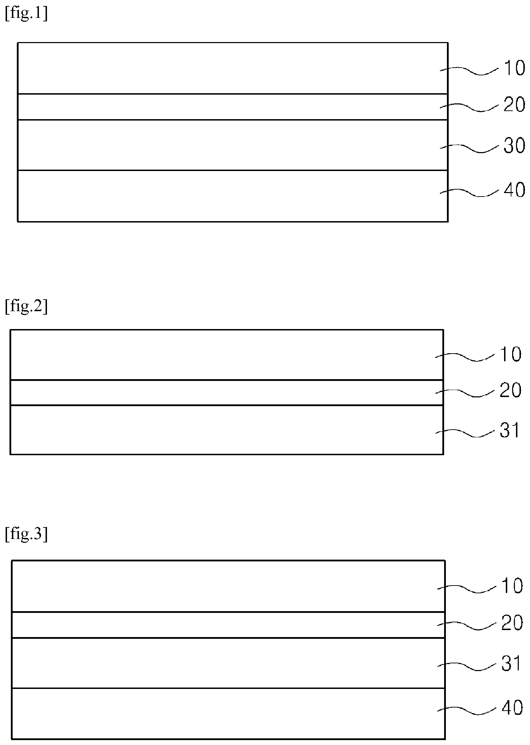

Fig. 1 illustrates a configuration of a conventional decorative film which includes a base layer 10, a metal-treated layer 20, an adhesive resin layer 30, a coating film layer 40 from the top.

The adhesive resin layer 30 includes an adhesive resin, for example, a polyester resin, a urethane resin, and an ester urethane resin. These adhesive resins are generally formed by urethane reaction, which generally proceeds slowly and is considerably affected by external environment, such as temperature and moisture.

Further, when the decorative film is manufactured and subjected to aging in a roll state, substantial quality deviation of the decorative film occurs within the roll and between rolls due to difference in heat transfer history and temperature between parts.

When a tin accelerator is used in an adhesive resin, the decorative film exhibits inadequate physical properties in terms of the degree of crosslinking and boil resistance.

Moreover, in the conventional decorative film, since the base layer 10 is a single polyethylene terephthalate (PET) layer, adhesive force between the base layer 10 and the metal-treated layer 20 as well as adhesive force between the base layer 10 and the adhesive resin layer 30 are low.

Thus, part of the adhesive resin layer 30 comes in contact with the base layer 10 through the metal-treated layer 20 and PET separation also occurs due to reduced adhesive forces between the base layer 10 and the metal-treated layer 20 and/or adhesive resin layer 30.

Fig. 2 illustrates a configuration of a decorative film according to a first embodiment of the present invention. The decorative film according to the first embodiment includes a base layer 10, a metal-treated layer 20, and an adhesive resin layer 31 from the top.

The base layer 10 preferably includes a PET resin and may also include acryl, polycarbonate (PC), and acrylonitrile butadiene styrene (ABS).

The base layer 10 is preferably a transparent layer having a light transmittance of 90% or higher in order to exhibit a clear metallic effect.

The base layer 10 preferably has a thickness of 10 to 50 µm.

The metal-treated layer 20 is a metal-deposited layer, which may be formed by general vacuum deposition. For example, the deposited layer may be formed by vacuum deposition at 10⁻² to 10⁻⁶ Torr and 300 to 1,800°C.

The metal-treated layer 20 may be formed of aluminum, copper, silver, white gold, tin, chrome, and nickel, wherein aluminum is generally used in view of cost.

The metal-treated layer 20 has a thickness of 1 µm or lower, preferably 50 to 1,000 Å, and more preferably 100 to 700 Å. When the thickness of the metal-treated layer 20 is less than 50 Å, the decorative film may have an inadequate metallic gloss. When the thickness of the metal-treated layer 20 is greater than 1,000 Å, the decorative film may allow generation of cracks and have reduced adhesion.

The adhesive resin layer 31 is formed of an adhesive resin composition including an adhesive resin as a main ingredient. The adhesive resin composition may include a curing agent and a coupling agent along with the adhesive resin. In particular, the adhesive resin composition according to the present invention necessarily includes an accelerator.

Examples of the adhesive resin may include an ester resin, a urethane resin, a urethane ester resin, an acrylic resin, and an acrylic urethane resin, specifically ester resins including neopentyl glycol (NPG), ethylene glycol (EG), isophthalic acid, and terephthalic acid.

The curing agent may include isocyanate curing agents, for example, toluene diisocyanate (TDI) adducts.

The curing agent may be present in an amount of 1 to 30 parts by weight based on 100 parts by weight of the adhesive resin.

The coupling agent may include epoxy silane compounds.

The coupling agent may be present in an amount of 0.01 to 10 parts by weight based on 100 parts by weight of the adhesive resin.

The accelerator may be present in an amount of 0.01 to 10 parts by weight based on 100 parts by weight of the adhesive resin.

An amine accelerator includes a functional group reacting with active hydrogen.

The reactive active hydrogen may include an OH group (included in ester and an acrylic compound), a COOH group (included in ester and an acrylic compound), and an NH group (generated by the reaction of an OH group and an NCO group).

The reactive functional group may include a ring compound, such as an aziridine group, epoxy, and a glycidyl group.

A compound including a reactive aziridine group includes aziridine compounds represented by Formula 1 and/or Formula 2, preferably at least one aziridine compound selected from the compounds represented by Formulas 4 to 9.

Specifically, Formula 4 is 1,1'-azelaoyl-bis-(2-methylaziridine), Formula 5 is N,N'-bis-propylene adipic acid amide(BPA), Formula 6 is 1,6-hexamethylendipropylenurea (HMPU), Formula 7 is toluene-2,6-dipropylenurea (TPU), Formula 8 is N,N'-bis-propylene isophthalic acid amide (BPI), Formula 9 is trimethylolpropane-tris-(N-methylaziridinyl)-propionate.

A compound including a reactive epoxy group includes a glycidyl amine compound represented by Formula 3, preferably glycidyl amine compounds represented by Formulae 10 and/or 11.

The adhesive resin layer 31 has a thickness of 1 to 15 µm, preferably 2 to 12 µm. When the thickness of the adhesive resin layer 31 is less than 1 µm, the decorative film has reduced adhesive strength. When the thickness of the adhesive resin layer 31 is greater than 15 µm, the decorative film is not easy to process due to reduced drying performance.

Fig. 3 illustrates a configuration of a decorative film according to a second embodiment of the present invention. The decorative film according to the second embodiment includes a base layer 10, a metal-treated layer 20, an adhesive resin layer 31, and a coating film layer 40 from the top.

The coating film layer 40 includes an acrylic resin, an ester resin, a polyvinyl chloride (PVC) resin, a urethane resin, and an olefin resin, preferably a PVC resin in view of flexibility, transparency, and heat resistance. As a PVC resin, a soft PVC resin including about 25 wt% of a plasticizer is preferably used.

The coating film layer 40 has a thickness of 50 to 1,000 µm, preferably 80 to 300 µm in view of strength, durability, flexibility, and workability. When the thickness of the coating film layer 40 is less than 50 µm, the decorative film may be easily torn or have reduced durability. When the thickness of the coating film layer 40 is greater than 1,000 µm, the decorative film may not function properly on a bent or grooved portion.

The coasting layer 40 may be omitted as necessary.

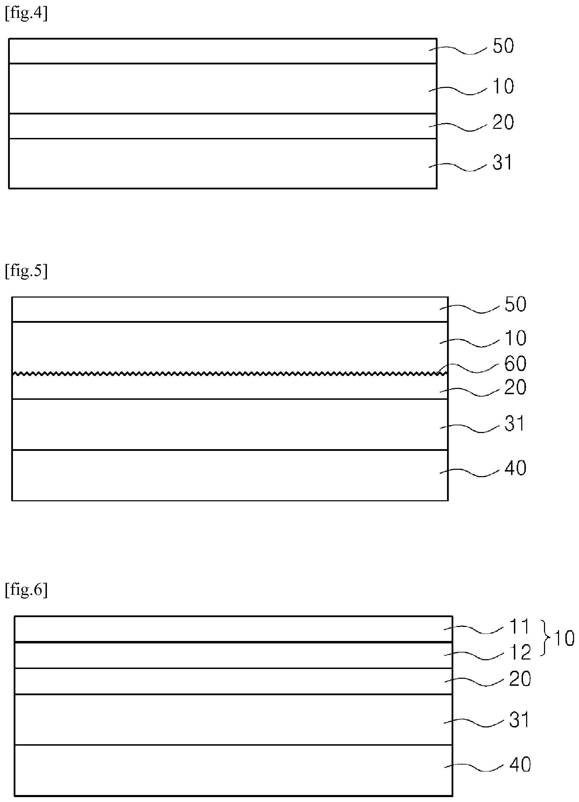

Fig. 4 illustrates a configuration of a decorative film according to a third embodiment of the present invention. The decorative film according to the third embodiment includes a surface-treated layer 50, a base layer 10, a metal-treated layer 20, and an adhesive resin layer 31 from the top.

The surface-treated layer 50 maintains the transparency of the surface of the base layer 10 and protects the surface.

The surface-treated layer 50 may include a general heat curable resin or ultraviolet curable resin, such as an acrylic resin and a urethane resin.

The surface-treated layer 50 may be omitted as necessary.

Fig. 5 illustrates a configuration of a decorative film according to a fourth embodiment of the present invention. The decorative film according to the fourth embodiment includes a surface-treated layer 50, a base layer 10, a metal-treated layer 20, an adhesive resin layer 31, and a coating film layer 40 from the top, wherein a hairline 60 is formed on a lower surface of the base film 10.

As the hairline 60 is formed on the lower surface of the base film 10, the decorative film may have an aesthetically pleasing metallic texture.

The hairline 60 may be formed by a general method, for example, a process of attaching an abrasive material uniformly to unwoven fabric and grinding the surface of a film and a process of grinding the surface using sandpaper.

The hairline 60 may be formed in a continuous pattern having a depth of 1 µm or less and an average width of 5 µm or less, thereby providing a more metallic effect.

The hairline 60 may be omitted as necessary.

Fig. 6 illustrates a configuration of a decorative film according to a fifth embodiment of the present invention. The decorative film according to the fifth embodiment includes a base layer 10, a metal-treated layer 20, an adhesive resin layer 31, and a coating film layer 40 from the top, wherein the base layer 10 is a coextruded sheet of a crystalline resin layer 11 and an amorphous resin layer 12.

As the base layer 10, a transparent coextruded PET sheet is used, instead of a single PET layer, thereby solving conventional problems.

The crystalline resin layer 11 is disposed outside of the base layer 10 and includes a crystalline resin, such as a PET resin, thus providing high gloss, contamination resistance, and durability.

The amorphous resin layer 12 is disposed inside of the base layer 10 and includes an amorphous resin, such as a polyester resin, thus exhibiting excellent adhesive strength to the metal-treated layer 20 or the adhesive resin layer 30 deposited on the metal-treated layer 20.

That is, the crystalline resin layer 11 having the PET resin having high crystallinity is disposed outside of the base layer 10 to improve external physical properties, such as gloss and abrasion resistance, while the amorphous resin layer 12 having low crystallinity (Tg: 40 to 80°C) increases the adhesive strength to the metal-treated layer 20 and the adhesive resin layer 30 formed on the metal-treated layer 20.

The base layer 10 consisting of the PET resin layer 11 having high crystallinity and the polyester resin layer 12 having low crystallinity is manufactured by coextrusion in molding the film and adhesion between coextruded layers is remarkably excellent.

Coextruded PET may include, for example, SL 10 and SL 15 manufactured by SKC Inc., which preferably has a thickness of 10 to 50 µm.

In the present embodiment, when a hairline is formed, the hairline is formed directly on a lower surface of the polyester resin layer 12 having low crystallinity and slightly high Tg.

In the present invention, an amine (including N) accelerator having a functional group reacting with active hydrogen is used for the adhesive resin needed for the preparation of a decorative film having a metallic effect to ensure coating stability, such as pot life, and to increase a reaction rate, thereby providing a decorative film having little deviation in quality (boil resistance) between and within rolls in a short time.

Pot life means usable time, the period of time for which a material remains usable after mixing with another material or opening the original package of the material. In detail, pot life is working time based on room temperature, 25°C, before a material becomes excessively viscous, decreasing coatability or becoming useless upon mixing or when mixed. That is, reaction between components is initiated upon mixing materials, causing increase in viscosity, and thus the materials become useless with time. Pot life is usable time, the period of time for which a composition remains useful after mixing with other additives.

Boil resistance is a physical property required for a sheet product including a base and a metal-deposited layer. A boil resistance test is used to measure the Erichsen value of a thin metal plate and generally used for an adhesion test of a coating such as paint and a film. In a test method, after Erichsen treatment (9 mm), the specimen is deposited at 80°C for 1 hour, followed by evaluation of appearance (mainly, a bottom surface). A punch tip of a test instrument has a radius of about 10 mm, and the Erichsen test is based on KSB 0812.

### Example 1 (Reference Example)

Aluminum was vacuum-deposited on a general untreated PET film having a thickness of 30 µm as a base layer at 10⁻⁴ Torr and 1,400°C, thereby forming a metal-treated layer having a thickness of 400 Å on a lower surface of the base layer. Then, an adhesive resin composition was applied to a soft PV film (including 25 wt% of a plasticizer) having a thickness of 100 µm as a coating film layer, thereby forming an adhesive resin layer having a thickness of 10 µm. Subsequently, the base layer formed with the metal-treated layer and the adhesive resin layer were subjected to dry lamination, thereby manufacturing a decorative film.

An adhesive resin was an ester resin (solution having a solid content of 30 wt%) including NPG, EG, isophthalic acid, and terephthalic acid. A curing agent was a TDI adduct type (solution having an NCO content of 7 wt%). A coupling agent was an epoxy silane compound KBM 403 (Shin-Etsu Chemical Co., Ltd.). An accelerator was an aziridine compound represented by Formula 4.

Compositions of the components are listed based on parts by weight in Table 1.

**TABLE 1**

| Kind | Adhesive resin | Curing agent | KBM 403 | DBTDL | Aziridine | Glycidyl |
|---|---|---|---|---|---|---|
| Comparative Example 1 | 100 | 8.0 | 0.1 | - | - | - |
| Comparative Example 2 | 100 | 8.0 | 0.1 | 0.1 | - | - |
| Comparative Example 3 | 100 | 8.0 | 0.1 | 0.5 | - | - |
| Example 1 | 100 | 8.0 | 0.1 | - | 0.1 | |
| Example 2 | 100 | 8.0 | 0.1 | - | | 0.1 |
| Example 4 | 100 | 8.0 | 0.1 | - | 0.1 | |

### Example 2

A decorative film was manufactured in the same manner as in Example 1 except that a glycidyl amine compound represented by Formula 10 was used as an accelerator.

### Example 3 (Reference Example)

A decorative film was manufactured in the same manner as in Example 1 except that SL 10 (coextruded sheet of PET and a polyester resin having a thickness of 30 µm) manufactured by SKC Inc. was used as a base layer.

### Example 4 (Reference Example)

A decorative film was manufactured in the same manner as in Example 1 except that an aziridine compound represented by Formula 9 was used as an accelerator.

### Comparative Example 1

A decorative film was manufactured in the same manner as in Example 1 except that an accelerator was not used.

### Comparative Example 2

A decorative film was manufactured in the same manner as in Example 1 except that 0.1 parts by weight of DBTDL was used as an accelerator.

### Comparative Example 3

A decorative film was manufactured in the same manner as in Example 1 except that 0.5 parts by weight of DBTDL was used as an accelerator.

### Comparative Example 4

A decorative film was manufactured in the same manner as in Example 1 except that a general binary liquid-type polyurethane resin was used as an adhesive resin and a primer layer was formed before forming a metal-treated layer.

### Experimental Example 1

The decorative films manufactured in the examples and the comparative examples were evaluated as to degree of crosslinking and boil resistance, and results thereof are listed in Table 2.

### The degree of crosslinking was evaluated as follows.

First, each adhesive resin composition was applied to a release paper and dried (Amount of coating: Dry 15 ± 1 µm, Dry conditions: 90°C, 100 seconds).

Next, a release paper was stacked thereon.

A release paper/adhesive/release paper laminate sheet was subjected to aging (40°C for 3 days, 50°C for 3 days).

A sample was collected (0.2 to 0.5 g) and put in a solvent (200 ml of ethyl acetate).

The sample was left at room temperature (23 ± 2°C) for 24 ± 4 hours and melted.

The product was filtered (150 to 300 mesh) and dried (Drying conditions: air heating oven at 110°C for 2 hours).

### The degree of crosslinking was measured.

The degree of crosslinking was expressed as a weight ratio (%) of the filtered resin to the initial weight of the sample.

### The boil resistance was evaluated as follows.

First, an adhesive resin composition was applied to an aluminum coated PET film and dried (Amount of coating: Dry 15 ± 1 µm, Dry conditions: 90°C, 100 seconds).

Then, PVC was stacked thereon.

The product was subjected to aging (40°C for 3 days, 50°C for 3 days).

The product was stacked on a primer-treated metal plate (Thickness: 0.8 mm).

After Erichsen test (8 to 10 mm), the product was evaluated as to boil resistance (80°C for 1 hour).

The boil resistance was evaluated based on appearance, particularly the state of a bottom surface. Creases and separation were identified and evaluations were classified into separation, poor, and good.

**TABLE 2**

| Kind | Crosslinking degree (%) | | Boil resistance | |
|---|---|---|---|---|
| | 40°C, 3 days | 50°C, 3 days | 50°C, 3 days | 50°C, 3 days |
| Comparative Example 1 | 36.0% | 41.6% | Separated | Separated |
| Comparative Example 2 | 45.0% | 60.0% | Separated | Poor |
| Comparative Example 3 | 56.0% | 65.0% | Separated | Good |
| Example 1 | 76.9% | 78.6% | Good | Good |
| Example 2 | 73.6% | 72.8% | Good | Good |
| Example 4 | 77.2% | 78.1% | Good | Good |

Table 2 illustrates evaluations of a reaction rate and efficiency (degree of crosslinking (%)). Comparative Example 1 not including an accelerator has substantially low degree of crosslinking under aging at 40°C, and thus the reaction is estimated to be slow.

Comparative Examples 2 and 3 using a tin compound as an accelerator have a better degree of crosslinking and boil resistance than those of Comparative Example 1 but are still inadequate.

Examples 1, 2 and 4 using an amine accelerator reacting with active hydrogen have a faster reaction rate (higher degree of crosslinking) even at low temperature than Comparative Examples 2 and 3 and exhibit excellent boil resistance.

### Experimental Example 2

The decorative films of Example 3 and Comparative Example 4 were subjected to a peeling test, and results thereof are illustrated in Table 3.

**TABLE 3**

| Test item | | Example 3 | Comparative Example 4 |
|---|---|---|---|
| Appearance | | Good | Good |
| Erichsen test (6 mm, 8 mm indentation after cross cutting) | Room temperature | Good | Good |
| | Boiling water resistance (100°C* 1 hour) | Good | Good |

As seen from Table 3, as a transparent coextruded sheet is used as a base layer in the present invention, adhesive strength between the base layer and the metal-treated layer can be improved without a process for forming a primer layer as in Comparative Example 4.

## Claims

1. A decorative film comprising:
a base layer (10);
a metal-treated layer (20) formed on a lower surface of the base layer; and
an adhesive resin layer (31) formed on a lower surface of the metal-treated layer and comprising an adhesive resin and an amine accelerator, wherein the amine accelerator comprises at least one selected from aziridine compounds represented by Formula 6 or a glycidyl amine compound represented by Formula 3: 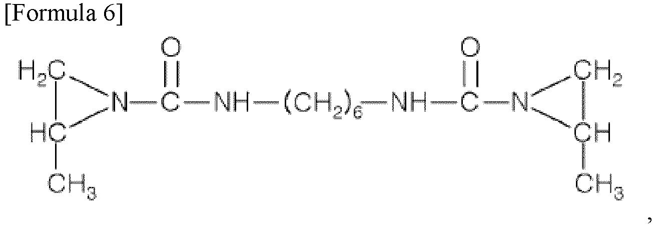 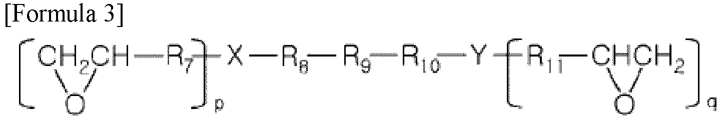
wherein R₇ and R₁₁ are each independently C₁ to C₄ alkylene, R₈ and R₁₀ are each independently a single bond, C₁ to C₄ alkylene, or C₆ to C₁₂ arylene, R₉ is C₁ to C₄ alkylene, or C₆ to C₁₂ arylene, X and Y are each independently an oxygen or nitrogen atom, at least one of X and Y is a nitrogen atom, p and q are each 1 when X or Y is an oxygen atom, and p and q are each 2 when X or Y is a nitrogen atom.

2. The decorative film according to claim 1, further comprising: a surface-treated layer (50) formed on an upper surface of the base layer (10).

3. The decorative film according to claim 1, wherein a hairline (60) is formed on the lower surface of the base layer (10).

4. The decorative film according to claim 1, wherein the base layer (10) is formed of a crystalline resin layer (11) and an amorphous resin layer (12);
a metal-treated layer (20) is formed on a lower surface of the amorphous resin layer (12).

5. The decorative film according to claim 4, wherein the crystalline resin layer (11) comprises a polyethylene terephthalate (PET) resin.

6. The decorative film according to claim 4, wherein the amorphous resin layer (12) comprises a polyester resin.

7. The decorative film according to claim 4, wherein the base layer (10) comprises a transparent layer.

8. The decorative film according to claim 4, wherein the amorphous resin layer (12) has a glass transition temperature of 40 °C to 80°C.

9. The decorative film according to claim 4, wherein a hairline (60) is formed on the amorphous resin layer (12).

## Patentansprüche

1. Dekorfolie umfassend:
eine Basisschicht (10);
eine Metall-behandelte Schicht (20), die an einer unteren Oberfläche der Basisschicht gebildet ist; und
eine Klebeharzschicht (31), die an einer unteren Oberfläche der Metall-behandelten Schicht gebildet ist und ein Klebeharz und einen Aminbeschleuniger umfasst, wobei der Aminbeschleuniger mindestens eine Verbindung umfasst,
die aus Aziridin-Verbindungen dargestellt durch Formel 6 oder einer Glycidylamin-Verbindung dargestellt durch Formel 3 ausgewählt ist: 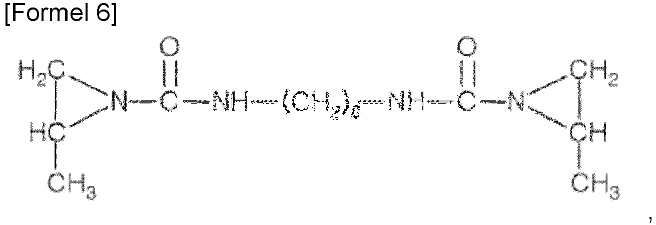 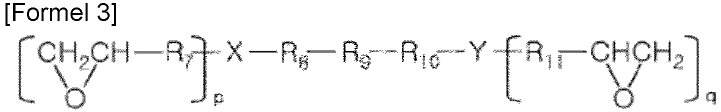 wobei R₇ und R₄₄ jeweils unabhängig voneinander für C₁- bis C₄-Alkylen stehen, R₈ und R₁₀ jeweils unabhängig voneinander für eine Einfachbindung, C₁-bis C₄-Alkylen oder C₆- bis C₁₂-Arylen stehen, R₉ für C₁- bis C₄-Alkylen oder C₆- bis C₁₂-Arylen steht, X und Y jeweils unabhängig voneinander für ein Sauerstoff- oder Stickstoffatom stehen, mindestens eines aus X und Y für ein Stickstoffatom steht, p und q jeweils für 1 stehen, wenn X oder Y für ein Sauerstoffatom steht, und p und q jeweils für 2 stehen, wenn X oder Y für ein Stickstoffatom steht.

2. Dekorfolie nach Anspruch 1, ferner umfassend: eine Schicht (50) mit behandelter Oberfläche, die an einer oberen Oberfläche der Basisschicht (10) gebildet ist.

3. Dekorfolie nach Anspruch 1, wobei eine Haarlinie (60) an der unteren Oberfläche der Basisschicht (10) gebildet ist.

4. Dekorfolie nach Anspruch 1, wobei die Basisschicht (10) aus einer kristallinen Harzschicht (11) und einer amorphen Harzschicht (12) gebildet ist;
eine Metall-behandelte Schicht (20) an einer unteren Oberfläche der amorphen Harzschicht (12) gebildet ist.

5. Dekorfolie nach Anspruch 4, wobei die kristalline Harzschicht (11) ein Polyethylenterephthalat- (PET)-Harz umfasst.

6. Dekorfolie nach Anspruch 4, wobei die amorphe Harzschicht (12) ein Polyesterharz umfasst.

7. Dekorfolie nach Anspruch 4, wobei die Basisschicht (10) eine durchsichtige Schicht umfasst.

8. Dekorfolie nach Anspruch 4, wobei die amorphe Harzschicht (12) eine Glasübergangstemperatur von 40 °C bis 80 °C aufweist.

9. Dekorfolie nach Anspruch 4, wobei eine Haarlinie (60) auf der amorphen Harzschicht (12) gebildet ist.

## Revendications

1. Film décoratif comprenant:
une couche de base (10);
une couche traitée au métal (20) formée sur une surface inférieure de la couche de base; et
une couche de résine adhésive (31) formée sur une surface inférieure de la couche traitée au métal et comprenant une résine adhésive et un accélérateur d'amine, dans lequel l'accélérateur d'amine comprend au moins un sélectionné parmi les composés d'aziridine représentés par la formule 6 ou un composé de glycidyl-amine représenté par la formule 3: 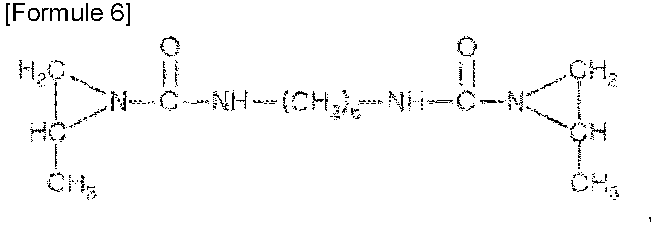 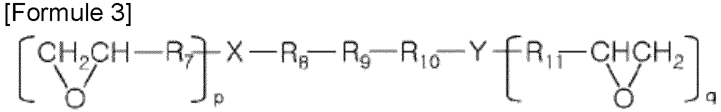 dans lequel R₇ et R₁₁ sont chacun indépendamment alkylène en C₁ à C₄, R₈ et R₁₀ sont chacun indépendamment une liaison simple, alkylène en C₁ à C₄, ou arylène en C₆ à C₁₂, R₉ est alkylène en C₁ à C₄ ou arylène en C₆ à C₁₂, X et Y sont chacun indépendamment un atome d'oxygène ou d'azote, au moins un parmi X et Y est un atome d'azote, p et q sont chacun 1 quand X ou Y est un atome d'oxygène, et p et q sont chacun 2 quand X ou Y est un atome d'azote.

2. Film décoratif selon la revendication 1, comprenant en outre: une couche traitée en surface (50) formée sur une surface supérieure de la couche de base (10).

3. Film décoratif selon la revendication 1, dans lequel une craquelure (60) est formée sur la surface inférieure de la couche de base (10).

4. Film décoratif selon la revendication 1, dans lequel la couche de base (10) est formée d'une couche de résine cristalline (11) et une couche de résine amorphe (12);
une couche traitée au métal (20) est formée sur une surface inférieure de la couche de résine amorphe (12).

5. Film décoratif selon la revendication 4, dans lequel la couche de résine cristalline (11) comprend une résine de polyéthylène téréphthalate (PET).

6. Film décoratif selon la revendication 4, dans lequel la couche de résine amorphe (12) comprend une résine de polyester.

7. Film décoratif selon la revendication 4, dans lequel la couche de base (10) comprend une couche transparente.

8. Film décoratif selon la revendication 4, dans lequel la couche de résine amorphe (12) a une température de transition de verre de 40 °C à 80 °C.

9. Film décoratif selon la revendication 4, dans lequel une craquelure (60) est formée sur la couche de résine amorphe (12).
